Europäisches Patentamt

European Patent Office

Office européen des brevets

(19)

(11) Publication number: **0 315 595**
A2

(12) **EUROPEAN PATENT APPLICATION**

(21) Application number: **88830444.1**

(51) Int. Cl.⁴: **B 62 D 49/08**

(22) Date of filing: **25.10.88**

(30) Priority: **02.11.87 IT 5378487**

(43) Date of publication of application:
**10.05.89 Bulletin 89/19**

(84) Designated Contracting States:
**AT CH DE ES FR GB LI**

(71) Applicant: **SAME S.p.A.**
**Viale F. Cassani, 14**
**I-24047 Treviglio Bergamo (IT)**

(72) Inventor: **Gallina, Giancarlo**
**c/o Same S.p.A. Viale F. Cassani, 14**
**I-24047 Treviglio (Bergamo) (IT)**

(74) Representative: **Buzzi, Franco et al**
**c/o Jacobacci-Casetta & Perani S.p.A. Via Alfieri, 17**
**I-10121 Torino (IT)**

(54) **A metal-mass ballasting device for tractors.**

(57) A ballasting device for tractors comprises a metal mass (2) provided with three points (3, 4) for direct connection to the arms (B, D) of the lifting apparatus (E, F, G,) of the tractor (T) for enabling it to be lifted, positioned in its operative position and set down by means of the lifting apparatus itself.

FIG. 4

EP 0 315 595 A2

**Description**

## A metal-mass ballasting device for tractors

The present invention relates in general to ballasting devices for tractors.

It is well known that such devices, which are normally metal masses fitted releasably to the tractor, have the function of increasing its inherent weight during operations which require a large tractive force.

These metal masses are conventionally fitted to suitable supports fixed to the tractor. In the case of tractors with three-point linkages and their respective lifting apparatus, it has been proposed to fit the ballasting masses to a support frame which has previously been connected to the three-point linkage.

In both cases, it is necessary to provide suitable auxiliary structures for supporting the metal masses, and, moreover, their fitting and removal must necessarily be carried out manually or with the aid of supplementary lifting equipment, with consequent inconvenience.

The object of the present invention is to avoid this problem and to produce a metal-mass ballasting device for tractors with three-point linkages with front lifting devices, which does not require auxiliary structures for its fitting and which can be manipulated in a practical and convenient manner.

According to the invention, this object is achieved by virtue of the fact that the metal masses of the ballasting device are constituted by a body provided with parts for direct connection to the arms of the tractor linkage and adapted to enable its lifting, positioning in its operative position, and setting down, by means of the lifting apparatus.

According to the invention, the body of the ballasting device has two projecting lateral pins for articulated engagement by the lower arms of the tractor linkage and an upwardly-projecting bracket for articulation to the upper rod of the linkage.

The body may be unitary or alternatively may be constituted by modular elements which can be combined to vary the ballasting mass in dependence on the intended use of the tractor.

The invention will now be described with reference to the appended drawings, provided purely by way of non-limiting example, in which:

Figure 1 is a schematic perspective view of a tractor provided with a ballasting device according to the invention,

Figure 2 is a perspective view of the ballasting device according to a first embodiment of the invention,

Figure 3 shows a variant of Figure 2, and

Figure 4 is a side elevation taken on the line IV of Figure 1, on an enlarged scale.

With reference to the drawings, an agricultural tractor is generally indicated T and is provided with a front three-point linkage A, of generally known type. The front linkage A includes two lower pivoted arms B with forked free ends C and an upper pivoted rod D. A lifting device is associated with the lower arms B and comprises essentially two pivoted arms E, with respective hydraulic actuators F, connected to the arms B by means of respective tie rods G.

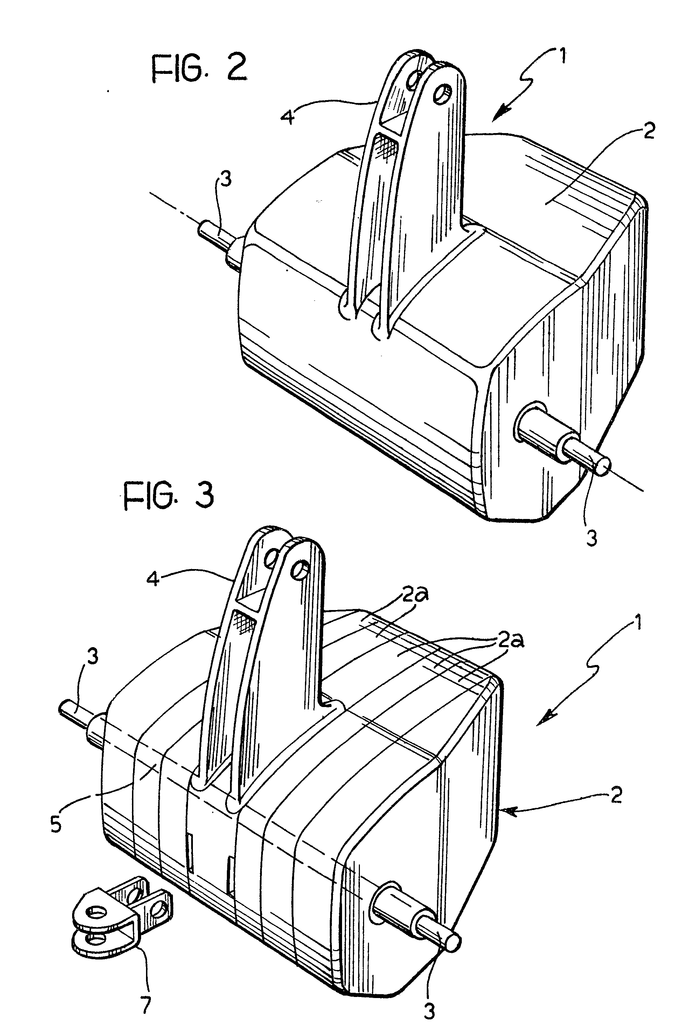

With reference now to Figure 2, a metal-mass ballasting device according to the invention, which can be fitted to the tractor T, is generally indicated 1. The ballasting device 1 is constituted by a shaped body 2 provided at its front end with two pins 3 which project from opposite sides of the body 2 and on its upper face with an upwardly projecting fork-shaped bracket 4.

In the case of Figure 2, the body 2 is unitary. In the variant of Figure 3, it may alternatively be constituted by a set of modular plates 2a which can be assembled and mounted on a support shaft 5 whose ends constitute the two lateral pins 3.

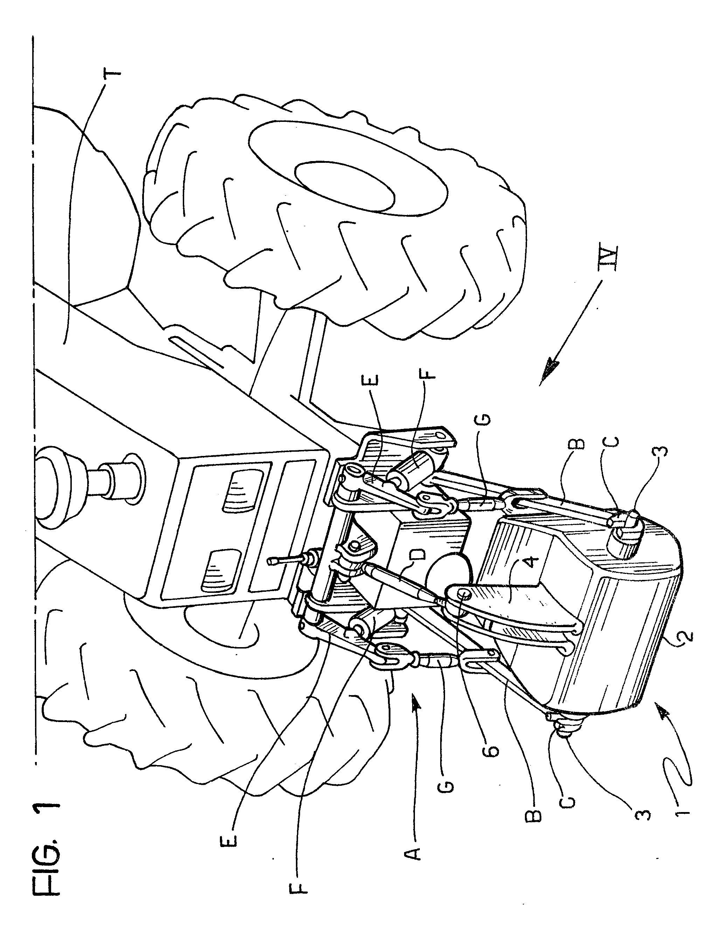

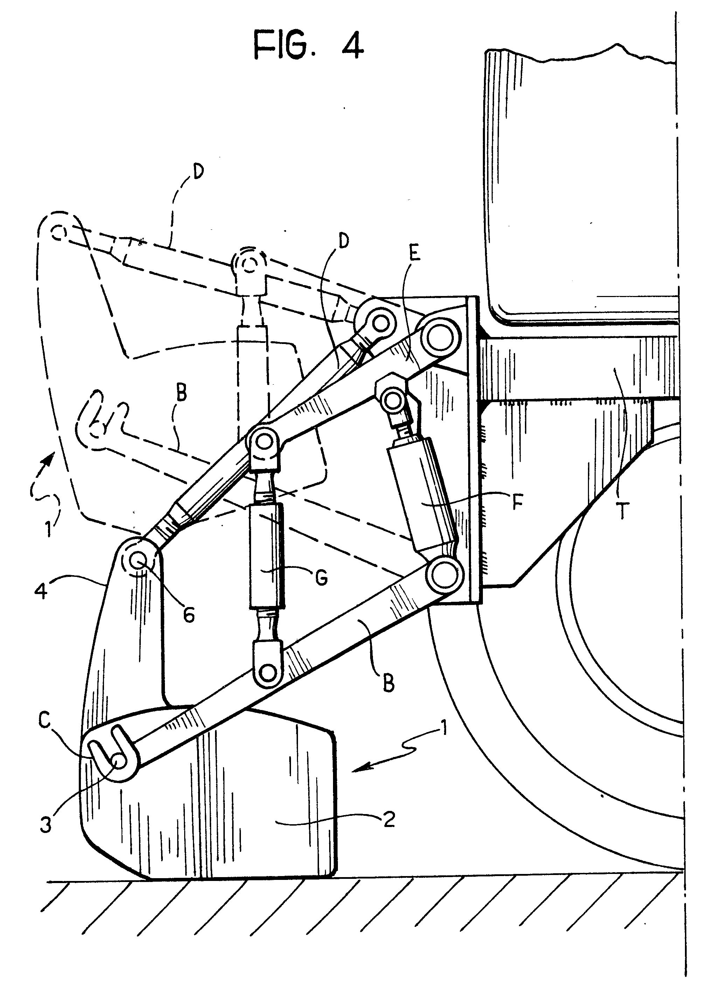

By virtue of the conformation described above, the ballasting device 1 can be fitted directly (that is, without the aid of intermediate support structures) to the front linkage A of the tractor T in the manner clearly illustrated in Figures 1 and 4. In fact, it suffices to insert the lateral pins 3 in the forked ends C of the lower arms B and to connect the forked bracket 4 to the free end of the upper rod D by means of a pin 6. This enables easy and convenient manipulation of the ballasting device 1 directly by the lifting apparatus of the front linkage A, which can lift the device 1 from the ground, position and hold it in its operative position of use illustrated in broken outline in Figure 4, and replace it on the ground as illustrated in continuous outline in Figure 4.

Naturally, the constructional details and forms of embodiment may be varied widely with respect to those described and illustrated, without thereby departing from the scope of the present invention.

Thus, for example, the pins 3 could be cylindrical or prismatic in shape, could be formed integrally with the body 2 or be applied or screwed to it, or could even be constituted by an additonal bar inserted in a hole or channel in the body itself. Moreover, the pins 3 could be replaced by recesses adapted to house corresponding attachment projections carried by the arms B.

Similarly, the bracket 4 could be constituted by an element of different shape, integral with or applied to the body 2, or by a hole, a recess or a pin, instead of by an apertured plate.

Moreover, as shown in Figure 3, it is possible to provide the ballast 1 with a front towing hook 7 which is fitted directly to the central element 2a and connected to the shaft 5.

**Claims**

1. A metal-mass ballasting device for tractors provided with three-point linkages and respective lifting apparatus, characterised in that the metal masses are constituted by a body (2) provided with parts (3, 4) for direct connection to the arms (B, D) of the linkage (A) of the tractor (T) and adapted to enable its lifting, positioning in its operative position, and setting down by means of the lifting apparatus (E, F, G).

2. A ballasting device according to Claim 1, characterised in that the body (2) has two projecting lateral pins (3) for articulated engagement by the lower arms (B) of the linkage (A) of the tractor (T), and an upwardly-projecting bracket (4) for articulation to the upper rod (D) of the linkage (A).

3. A ballasting device according to Claim 1 or Claim 2, characterised in that the body (2) is unitary.

4. A ballasting device according to Claim 1 or Claim 2, characterised in that the body (2) is constituted by modular component elements (2a).

5. A ballasting device according to Claim 1, or Claim 2, characterised in that it incorporates a towing hook (7).

FIG. 1

EP 0 315 595 A2

FIG. 2

FIG. 3

# FIG. 4